# EUROPEAN PATENT APPLICATION

(11) **EP 3 800 109 A1**
(43) Date of publication of application: **07.04.2021**
(21) Application number: 19201187.2
(22) Date of filing: 02.10.2019
(51) Int. Cl.: B62D 1/06, B62D 1/08

(54) **STEERING WHEEL WITH A STORAGE AND STEERING CONFIGURATION**

(71) Applicant: NIO (Anhui) Holding Co., Ltd., Hefei City, Anhui Province (CN)
(72) Inventor: PAESEN, Jochen, Anting, Jiading, Shanghai (CN); CUEFF, Julien, Anting, Jiading, Shanghai (CN); FROMME, Philipp, Anting, Jiading, Shanghai (CN)
(74) Representative: Vossius & Partner Patentanwälte Rechtsanwälte mbB

(57) **Abstract**

The present invention relates to a steering wheel (10) with an adjustable configuration comprising a hub (12) configured to be connected to a steering column and a rim (16) connected to the hub (12), the rim (16) comprising at least a first and a separate second rim segment (18, 20),
wherein, in a steering configuration, the two rim segments (18, 20) form a continuous rim (16) that defines a major plane of extension, and
wherein, when adjusting the steering wheel (10) into a storage configuration, at least one of the rim segments (20) is pivoted around an associated pivot axis (38) that extends transversely to an axis of the steering column, such that the respective rim segment (20), is arranged out of the major plane of extension of the rim (16),
wherein the pivot axis (38) is arranged behind the major plane of extension of the rim (16).

## Description

The present invention relates to a steering wheel for a motor vehicle being configured to be adjusted between a steering configuration and a storage configuration. The invention further relates to a method for adjusting a steering wheel of a motor vehicle between a storage configuration and a steering configuration. In addition, the invention also relates to a steering arrangement and to a motor vehicle.

Steering wheels that are adjustable between a storage configuration and a steering configuration may provide good comfort and handling for a driver during steering of the vehicle that is comparable to regular steering wheels while providing increased space for the driver or a person sitting in the driver's seat when the wheel is not used for steering the vehicle. For example, in the steering configuration, a steering wheel may be turned for directing the front wheels of the vehicle in the desired direction. In the storage configuration, the wheel may occupy less space or extend less into the passenger compartment of the vehicle.

US 2017/0297606 A1 describes a system for automatically adjusting a steering wheel of a vehicle. The steering wheel comprises two halves and an actuator configured to collapse the steering wheel. The steering wheel is folded in a direction orthogonal to a direction of a longitudinal axis defined by a steering column. A pivot axis is arranged at the front end of a central hub, thus reducing internal space in the hub available for other components. This renders packing of components of such a steering wheel difficult.

WO 2917/060149 A1 describes a steering that can be folded. Overall, the mechanics and components are similar to the steering wheel described in US 2017/0297606 A1. Accordingly, such a steering wheel also has packing problems.

US 2014/0277896 A1 describes a steering wheel with a manual driving mode and an autonomous mode. Compared to the driving mode, a wheel rim is retracted from the driver along the steering column while a main body portion in the center stays in place. Further, the retracted rim may still block a view in a similar way to its position in the driving mode. In addition, the rim needs to be guided along its full range of motion, leading to packing problems in the main body portion.

US 2018/0141581 A1 describes a steering apparatus that allows adjustment of the steering wheel position with a telescopic mechanism and an electric tilt mechanism. Such an adjustment only allows aligning the steering wheel to a driver's position, size and preferences. No two distinct configurations that may enhance comfort are described.

A task of the present invention is to provide an improved steering wheel with a steering configuration and a storage configuration, to provide an improved steering arrangement, to provide an improved motor vehicle and to provide an improved method for adjusting a steering wheel with a steering configuration and a storage configuration, in particular to mitigate or overcome problems existing in the art. Preferably, the present invention provides an arrangement that is especially suitable for packing of components in the steering wheel.

According to the invention, this task is resolved by the subject-matter of the independent claims. Advantageous embodiments and expedient developments are detailed in the respective dependent claims, wherein advantageous embodiments and expedient developments of one aspect also constitute advantageous embodiments and expedient developments of other aspects.

A first aspect of the invention relates to a steering wheel for a motor vehicle. The steering wheel comprises a hub configured to be connected to a steering column of the motor vehicle and a rim connected to the hub, the rim comprising at least a first and a separate second rim segment. Separate may mean, for example, that those two segments are not of unitary, one-piece construction and/or are also not fixed to each other, in particular permanently and/or directly.

A driver may turn the wheel, in particular by handling the rim, to turn the steering column connected to the hub. With the turning of the wheel, the driver may control the driving direction of the vehicle. The hub may comprise components and structures for the attachment to the steering column, such as threads, one or more recesses and/or protrusions, clamps and/or clamping surfaces. The connection of the hub to the steering column may allow to align a steering column axis to a turning axis of the steering wheel, which may correspond to an axis of symmetry of the steering wheel. Usually, the orientation of the steering column relative to the hub is predetermined by the design of the hub and can be unambiguously determined from the steering wheel, in particular its hub. The steering column may also be understood as the bearing and/or shaft for supporting the steering wheel, in particular its hub. This may in particular be the case if the steering wheel is not mechanically connected to the wheels, for example in a car with a steer-by-wire system. The axis of the steering column is preferably coaxial or equal to an axis of rotation of the steering wheel for steering the vehicle.

The steering wheel is configured to be adjusted between steering configuration and a storage configuration. In the steering configuration, the two rim segments form an essentially continuous rim that defines a major plane of extension, in particular a ring-shaped and/or plane rim. When adjusting the steering wheel from the steering configuration into the storage configuration, at least one of the rim segments is pivoted around an associated pivot axis that extends transversely to an axis of the steering column, such that at least part of the respective rim segment, preferably the whole rim segment, is arranged out of the major plane of extension of the rim.

Due to the described storage configuration, the steering wheel does not block a view through a windshield and/or on instruments in a dashboard or at least is less blocking than in the steering configuration. For example, with an upper half rotated out of the view, a person seated in the driver's seat may easily see and/or reach a screen in the dashboard. Further, more space may be made available to that person. Similarly, if additionally or alternatively a lower half is rotated towards a dashboard of the vehicle, more leg-space may be made available to a person seated in the driver's seat. Valuable space directly accessible by the driver may be freed for his personal use. Simultaneously, in the steering configuration, the steering wheel is particular easy to handle by the driver due to the essentially continuous form of the rim.

The rim is preferably configured for gripping and/or handling the steering wheel. Usually, the plane of the rim is arranged perpendicular to the axis of the steering column for ease of steering. For example, the rim segment may be partially ring shaped, e.g. a rim segment is a segment of a ring. Such a ring does not necessarily has to be round but may also have other shapes, such as forming an oval or having partially curved and/or flat sides. In particular, a flat bottom of the steering wheel when aligned for straight driving may be beneficial in providing more leg room.

The hub may comprise an air bag and one or more actuation elements, for example for a motor vehicle horn and/or for controlling other car functions and/or devices, such as a radio. Such actuation elements may also be arranged on the rim and/or spokes connecting the rim to the hub. Preferably, the hub is a central element between the rim segments. In particular, the hub may be arranged in a plane of symmetry of the steering wheel. For example, an actuator for adjusting the configuration of the steering wheel, sensors, a locking mechanism for blocking adjustment of the steering wheel configuration, and/or an airbag may all need to be at least partially integrated into the hub. The different components may also need connections such as electric wires. Overall, installation space in the hub is scarce and packing very difficult even in conventional steering wheels. These problems, however, are even amplified if the steering wheel is designed to be adjusted between two configurations, since the additional components for such an adjustment also need to be installed into such a steering wheel.

The pivot axis of the steering wheel according to the first aspect, at least in the storage configuration, is preferably arranged behind the major plane of extension of the rim in a view along the axis of the steering column. This prevents the pivot axis from requiring installation space in a front end of the hub, wherein the front end is facing the driver and/or is facing away from a dashboard and steering column of the vehicle. In particular, arrangement and installation of actuating elements on the hub and an airbag in the hub is thus facilitated or at least not complicated, as might be the case with a more forward arrangement of the pivot axis. Preferably, the pivot axis is arranged spaced apart to the rim or is arranged directly adjacent to the rim of the steering wheel in a view along the major plane of extension of the rim in the steering configuration.

For example, the pivot axis may be arranged at a base side of a honk actuation element and/or a base side of the hub, wherein the base side may be defined as the half, preferably third, of such a part closest to the dashboard and/or furthest away from the driver. This may further simplify packing of the steering wheel.

A respective spoke connecting the at least one pivotable rim segment to the hub may be pivotably connected to the rim, thus defining the pivot axis. E.g., the hub facing end of the spoke may be part of the pivot axis and/or respectively a pivot joint. Such a design may result in a robust steering wheel with a slim and/or compact rim. Preferably and correspondingly, an end of the spoke facing the respective rim segment may be rigidly connected to that rim segment.

The rim configuration may correspond to the steering wheel configuration. E.g. if the steering wheel is in the steering configuration the rim and/or its segments, in particular any pivotably attached rim segment, are in their steering configuration as well. The same applies correspondingly for storage configuration. Accordingly, steering and storage configuration may be used equally for the steering wheel and for any component moveable for the adjustment of the steering wheel configuration.

The major plane of extension of the rim may only be defined in the steering configuration. By comparison, in the storage configuration the two rim segments may be angled to each other, thus not lying in and/or defining a or the major plane of extension for the rim.

Preferably, in the storage configuration, at least part of the respective rim segment that is pivoted for adjustment of the steering wheel configuration, preferably the whole rim segment, is arranged out of the major plane of extension of the rim. E.g., that rim segment is rotated out of the major plane of extension for adjusting the steering wheel from the steering configuration to the storage configuration. Preferably, an extension of the major plane of extension of the steering wheel along the axis of the steering column, e.g. its thickness, may correspond to the extension and/or thickness of the rim segments in that direction. In that case, in the steering configuration, preferably each rim segment is completely arranged in the major plane of extension. A plane formed by a planar rim in the steering configuration may correspond to its major plane. The major plane of extension is preferably essentially perpendicular to an axis of the steering column.

Each rim segment may have a major plane of extension that corresponds to the major plane of extension of the rim in the steering configuration. E.g., the major plane of extension of each rim segment is arranged in or at least parallel to the major plane extension of the steering wheel in the steering configuration. The pivoting of a rim segment for adjusting the steering wheel into the storage configuration may result in the major plane of that rim segment forming an angle with the major plane of the rim in the steering configuration. In the steering configuration, the major planes of extension of the rim segments preferably correspond to the major plane of extension of the steering wheel. In the storage configuration, the major plane of extension of at least one of the rim segments may form an angle with the major plane of extension of the steering wheel in the steering configuration. Each rim segment is preferably partially ring shaped, e.g. is a segment of a ring.

The major plane of extension of the rim in the steering configuration may also be referred to as the major plane of extension of the steering wheel in the steering configuration, the major rim plane, the major rim plane of extension in the steering configuration, the rim steering configuration plane, the rim steering configuration extension plane, and/or the like.

The rim segments may each be connected to the hub by one or more respective spokes. The spokes may extend perpendicular to the axis of the steering column or transversal, providing a distance between the hub and the rim in the direction along the axis of the steering column. In a simple case, the spokes may be configured as essentially straight bars or tubes.

Preferably, any connection may be a mechanical connection. In particular, the connection of the rim segments to the hub and/or the hub to the steering column may be a fixed connection, possibly a releasably fixed connection. For example, a connection may mean that two parts are screwed to each other, bonded and/or of uniform integral design. In particular, the connection of spokes to other parts may be mechanically fixed. However, any such connections may comprise additional types of connections, such as an electrical wiring for the actuating elements. Preferably, at least one of the rim segments may be moveably connected to the hub for adjusting the configuration of the wheel. Such a connection may be provided with a joint, such as a pivot joint, and/or a guide, which may allow, for example, translatory movement.

"Behind" and "in front" may be defined from a driver's perspective, i.e., the side facing a driver is the front and the opposite side is the back of the steering wheel and its components. Preferably, "behind" and "front" form a direction that additionally or alternatively reversely corresponds to a forward-backwards direction of a car, wherein a front of the steering wheel is facing in the backward direction of the car Alternatively or additionally, the "back side" may also be defined as facing the dashboard when mounted to a motor vehicle and/or the "front side" as facing the passenger compartment in the vehicle and/or a driver' seat.

The axis of the steering column may correspond to an axis of the hub and/or an axis around which the steering wheel is rotated and/or turned to steer the motor vehicle. The axis of the steering column and the steering wheel and/or its hub may be coaxial to each other. The axis of the steering column may be recognizable on the steering wheel, in particular due to mounting elements and/or surfaces, such as bearings for attaching of the hub and the steering column to each other.

The motor vehicle may preferably be configured as a car. Usually, in the steering configuration, the end faces of the rim segments in a circumferential direction are facing each other, in particular being arranged adjacent to each other and/or touching. Preferably, for adjusting the steering wheel between the steering configuration and the storage configuration, only one of the rim segments is moved, in particular relative to the hub. Such a configuration may result in a particular simple design. However, also both of the rim segments may be moved relative to the hub for adjusting the steering wheel configuration. Preferably the two rim segments are not connected to each other, in particular not permanently, to allow easy adjustment between the configurations.

The storage configuration may also be referred to as a collapsed configuration and/or a configuration providing the passenger with more available interior space and/or a better view of a dashboard and/or a display.

The steering wheel may also comprise several separate rim segments, such as three, four or more segments. In the steering configuration, all segments may form the essentially continuous rim. Again, just one or several of these segments may be adjusted for changing the configuration of the steering wheel. For example, two or more segments may be pivoted out of the major plane of extension of the rim. Preferably, each respective pivot axis of each pivotable rim segment is arranged behind the major plane of extension of the rim, in a view along the axis of the steering column. More parts may allow to provide a storage configuration that occupies less space in the passenger compartment and/or that may be folded to better adhere to a contour of a dashboard adjacent the steering wheel. Less components may require less space in a direction along the axis of the steering column.

The steering wheel may also comprise a locking mechanism that blocks adjustment between the configuration in the steering configuration and/or the storage configuration, in particular by blocking movement of rim segments relative to the hub. Such a locking mechanism may increase safety and also allow secure steering with just handling the second rim segment or any other rim segment moveable for adjustment of the steering wheel configuration. Preferably, the locking mechanism is arranged at the pivot axis, in particular in the hub and/or the respective end of the spoke. Such a design may be beneficial for packing of the steering wheel.

In the context of this document, the driver's seat may be defined as the seat facing the steering wheel and/or as the seat that allows handling the steering wheel at least in the steering configuration.

In a further preferred embodiment of the steering wheel, in the steering configuration, the pivot axis of the respective rim segment corresponds to an end or both ends of the rim segment. Alternatively, in the steering configuration, the pivot axis is arranged behind a major plane of extension of the respective rim segment. Correspond in this context may be defined as intersecting the respective end(s) and/or being coaxial thereto. Packing of the hub may be facilitated with such a design and/or the storage configuration may provide an especially large available passenger space.

In a further preferred embodiment of the steering wheel, the pivot axis of the respective rim segment is perpendicular to the axis of the steering column. In the context of this document, the respective rim segment may refer to the rim segment that is pivoted for adjustment between the two configurations of the steering wheel. If both or, in the case of three or more rim segments, more rim segments are pivotable for the adjustment, the respective rim segment may refer to all of the pivoted rim segments, some or just one pivotable rim segment. In the following, the pivot axis of the respective rim segment may also be called the pivot axis, although there may be several rim segments that are pivoted for adjusting the steering wheel between the storage configuration and steering configuration, each preferably with a corresponding pivot axis. The perpendicular axis may allow for an intuitive adjustment actuation and movement in case of a manual adjustment. Further, the steering wheel may thus be configured to fit well against the dashboard in the storage configuration, resulting in a large available space in front of the driver's seat, thus increasing his comfort.

In a further preferred embodiment of the steering wheel, the major plane of extension of the steering wheel rim in the steering configuration is parallel to the pivot axis. The pivot axis may extend parallel to the major plane of extension of the rim. Such a design may facilitate a symmetrical construction of the steering wheel, possibly resulting in decreased overall costs. In particular, a larger amount of identical or at least very similar parts may possibly be used.

In a further preferred embodiment of the steering wheel, the pivot axis is spaced apart to the rim, in particular its major plane of extension, especially in a direction along the axis of the steering column, and/or wherein the pivot axis intersects with the hub spaced apart to the rim, especially in a direction along the axis of the steering column. Packing of the hub may be facilitated and leg-room for a person occupying the driver's seat may be increased with such a design.

In a further preferred embodiment of the steering wheel, the pivot axis extends horizontally, in particular with the steering wheel in its mounted position on the steering column and/or the motor vehicle. Additionally or alternatively, the steering wheel is configured so that the pivot axis is orientated horizontally in the storage configuration and/or during adjustment of the steering wheel between its configuration. This may allow improved fit of the folded steering wheel to a contour of the dashboard, thus increasing available space for a person occupying the driver's seat.

In a further preferred embodiment of the steering wheel, the steering wheel is configured to translatory move the pivot axis during adjustment between the steering configuration and the storage configuration. The hub of the steering wheel may comprise a corresponding guide, such as a groove in the body of the hub in which part of a respective spokes are received. For example, the spokes connecting each rim segment to the hub may move towards the dashboard during adjustment from the steering configuration to the storage configuration. Such a movement of the spokes may also move the pivot axis out of the major plane of extension if it initially is arranged at the major plane of extension. For example, free leg-room for the person occupying the driver's seat may thus be increased in the storage configuration.

Alternatively, the pivot axis may have a position and/or arrangement fixed relative to the hub. In particular, the pivot axis may be defined by a pivot joint formed by the hub and the respective spoke. A fixed in place pivot axis allows a simple design of the steering wheel which facilitates packaging.

In a further preferred embodiment of the steering wheel, the pivot axis initially lies within the major plane of extension of the rim, in particular at its edge, and is translatory moved out of that plane during adjustment of the steering wheel from the steering configuration to the storage configuration. Transversely moving the pivot axis may also be referred to as shifting of the axis. Preferably, the axis is shifted towards the dashboard during adjustment from the steering configuration to the storage configuration and/or along the steering column. Preferably, such as shift leaves the relative orientation of the pivot axis relatively to the major plane of extension unchanged.

In a further preferred embodiment of the steering wheel, the pivot axis is moved at least backwards along the axis of the steering column, optionally backwards and upwards in a vertical direction, in particular on a curved part, when being translatory moved. Such a movement is preferred to increase free leg-room and/or if a lower part of the rim is pivoted, such as a rim segment constituting a lower half of the rim. Additionally or alternatively, the movement may also be backwards and downwards. Such a movement is preferred to improve vision through a windshield and/or on a display of the dashboard for the person in the driver's seat and/or if an upper part of the rim is pivoted, such as a rim segment constituting an upper half of the rim.

In a further preferred embodiment of the steering wheel, at least the respective rim segment is moved during adjustment between the storage configuration and the steering configuration, preferably each rim segment, is connected to the hub with at least one spoke, preferably at least one respective spoke. Such a design may be simple, reliable and robust.

In a further preferred embodiment of the steering wheel, the respective spoke connecting each respective rim segment to the hub that is moveable for adjusting the configuration of the steering wheel terminates at least with one end in the pivot axis, preferably with its two ends and/or having an axial extension being coaxial with the pivot axis. Such a design results in a simple and reliable construction and may avoid relative movement of the spoke at the rim, which could possibly be uncomfortable to a person still holding the rim during adjustment of the steering wheel configuration.

In a further preferred embodiment of the steering wheel, the respective spoke connecting each respective rim segment to the hub that is moveable for adjusting the configuration of the steering wheel is pivotably mounted to the hub and optionally translatory moveable. Such a design may also avoid relative movement of the spoke at the rim, which could otherwise possibly be uncomfortable to a person still holding the rim during adjustment of the steering wheel configuration. The additional degree of freedom due to the translatory movement may result in a more comfortable steering configuration and/or positioning of the rim and/or in more available free-space for a person sitting in the driver's seat. Free space may be defined as space that is easily accessible and/or accessibly without steering wheel obstruction by a person sitting in the driver's seat.

In a further preferred embodiment of the steering wheel, the two rim segments constitute two halves of the rim, preferably the two halves being an upper half and a lower half, respectively, and/or preferably the two rim segments being symmetrical to each other, preferably at least the upper half being moveable for adjusting the configuration of the steering wheel. The upper and lower half may be defined in a mounted position on the steering column, preferably with the upper half being located on the upper side with the motor vehicle being steered in a straight line and/or the wheels facing straight forward. Upward and downward may be additionally or alternatively be defined by gravity. The rim segments may, for example, be symmetrically arranged with respect to a plane including the axis of the steering column in the steering configuration and/or with respect to a plane being transversal, in particular perpendicular, to the axis of the steering column in the storage configuration. Moveable may relate to being able to be pivoted and optionally translatory moveable, such as with a shifting motion. For adjusting the steering wheel configuration, only the upper half, the lower half or both upper and lower half may be pivoted. A very compact storage configuration may be achieved with a high degree of fit against the dashboard when being tilted away from the driver. Pivoting the upper half into the storage configuration may improve the view through the windshield and on a display in the dashboard while pivoting the lower half into the storage configuration may improve the leg-room. Further, using symmetrical rim segments may be easily used. This may allow using identical or similar parts, thus reducing overall costs.

In a further preferred embodiment of the steering wheel, the steering wheel comprises an actuator, such as an electric motor, for adjusting the steering wheel between the storage configuration and the steering configuration, in particular by pivoting one of the rim segments and optionally by translatory moving one pivot axis. Such an actuator may allow comfortable and in particular automatic adjustment of the steering wheel configuration.

In a further preferred embodiment of the steering wheel, the steering wheel is configured to be adjusted into the steering configuration in response to a change into a manual driving mode of the motor vehicle and into the storage configuration in response to a change into an autonomous driving mode of the motor vehicle, preferably by means of the above-described actuator. Such a design of the steering wheel allows to automatically provide the steering wheel configuration that is appropriate, in particular most comfortable, in the current mode of the vehicle. A manual driving mode may be any mode where the driver is required to steer the vehicle with the steering wheel and/or must be able to overrule autonomous steering commands by an autonomous driving device of the vehicle. For example, such overruling is usually required when the vehicle is at least partially controlled by a lane-keeping assistant. An autonomous driving mode may be any mode where the driver is not required to steer the vehicle with the steering wheel during a driving operation, in particular such a high-level autonomous control that the possibility to overrule autonomous steering commands by the autonomous driving device of the vehicle is not required anymore. In addition, the steering wheel may also be configured to be adjusted into the storage configuration in response to the vehicle being stopped and/or the engine being turned off. This allows a comfortable rest and easy entry into and exit from the driver's seat.

For the automatic adjustment, the steering wheel may comprise a control device for adjusting its configuration, an actuator configured for moving parts of the steering wheel, in response to a control signal provided by the control device for adjusting the steering wheel configuration and/or a sensor configured for detecting the driving mode of the vehicle. In a very simple example, such a sensor may be an electrical interface that allows the control device to receive a signal from an autonomous driving device of the motor vehicle indicating the current driving mode of the vehicle.

In the storage configuration, the steering wheel may be configured not to rotate around the axis of the steering column, in particular to a turning of the front wheels due to a steering command by the autonomous control device. This allows more compact storage and more freed passenger compartment space, in particular because the immobile steering wheel may rest on vehicle components such as the dashboard. Alternatively, the steering wheel may be configured to rotate around the axis of the steering column not only in the steering configuration but also the storage configuration, for example turning with the front wheels due to a steering command by the autonomous control device. This may provide the driver with visual feedback on the autonomous steering commands and increase his trust in such a system. The control unit may correspond to the above-described control device. The sensor may correspond to the above-described sensor or may, for example, be a processor or other device that handles an internal status indication or a sensor of the autonomous driving device.

In a further preferred embodiment of the steering wheel, the whole steering wheel is configured to be moveable from a first position in the steering configuration to a second position in the storage configuration, in particular along the axis of the steering column and/or downwards or upward. Such movement may be understood as comprising also the hub and/or excluding relative movement of the parts of the steering wheel to each other. For example, the whole steering wheel is moved towards the dashboard for storage, thus freeing even more space in the passenger compartment. The downward and/or upward shift may be a shift together with the steering column and/or an angle adjustment of the steering column, as is usually also manually provided on non-autonomous cars for adjusting the steering wheel position to the driver. However, by synchronizing such an adjustment with the configuration change, comfort in the driving configuration and the storage configuration is increased. Preferably, the position of the steering wheel is adjusted simultaneously with or after adjustment of the rim segments when adjusting the steering wheel between the steering configuration and storage configuration. The steering column may be moved together with the steering wheel, e.g. being retracted along its axis and/or tilted, in particular such that the steering wheel is moved closer to a dashboard of the car and/or away from a driver seat. Preferably, the steering wheel is configured to allow adjustment of the first position, in particular by a driver and/or manually. With a configurable first position, the spatial arrangement of the whole steering wheel may be adjusted to the driver's needs, in particular in the driving configuration.

A second aspect of the invention relates to a steering arrangement with the steering wheel according to the first aspect. Since the steering arrangement according to the second aspect comprises the steering wheel according to the first aspect, improvements, features and embodiments of the first aspect can be considered as examples and embodiments of the second aspect, and vice versa. The steering arrangement may further comprise the steering column of the motor vehicle, a sensor configured to detect the driving mode of the motor vehicle and/or a control unit configured for adjusting the configuration of the steering wheel, in particular in response to the detected driving mode. Additionally or alternatively, the steering arrangement may also comprise a dashboard of the vehicle. Preferably, the steering wheel, in particular at least one rim segment, is configured to be folded, e.g. at least partially pivoted, towards the dashboard, in particular with at least a part of the respective rim segment in the storage configuration resting on the dashboard or being adjacent and/or aligned to part of the dashboard. Preferably, the at least a part of the respective rim segment is closer and/or more aligned with the dashboard in the storage configuration than in the steering configuration. Such a design is particular comfortable for a person occupying the driver's seat.

A third aspect of the invention relates to a motor vehicle. The motor vehicle comprises the steering arrangement according to the second aspect and/or the steering wheel according to the first aspect. Since the motor vehicle according to the third aspect comprises the steering wheel according to the first aspect and/or the steering arrangement according to the second aspect, improvements, features and embodiments of the first aspect and second aspect can be considered as examples and embodiments of the third aspect, and vice versa. Preferably, the motor vehicle is being configured to be selectable driven in a manual driving mode and an autonomous mode. Further details and definitions of such driving modes may be found above. In particular, the motor vehicle may be configured to automatically adjust the steering wheel configuration in response to a selection of a driving mode.

A fourth aspect of the invention relates to a method for adjusting a steering wheel of a motor vehicle between a storage configuration and a steering configuration. The steering wheel comprises a hub configured to be connected to a steering column of the motor vehicle and a rim connected to the hub, the rim comprising at least a first and a separate second rim segment. Preferably, the steering wheel is configured as the steering wheel according to the first aspect. Similar, the method may also be suitable to adjust the configuration of a steering wheel of the steering arrangement of the second aspect and/or to operate a motor vehicle according to the third aspect. Accordingly, improvements, features and embodiments of the first, second and third aspect can be considered as examples and embodiments of the fourth aspect, and vice versa.

In a preferred embodiment, the method comprises the step of arranging the two rim segments to form an essentially continuous rim with a major plane of extension, in particular a ring-shaped and/or plane rim, in the steering configuration. Further, the method may comprise pivoting at least one of the two rim segments around an associated pivot axis that extends transversely to an axis of the steering column, such that at least part of the respective rim segment, preferably the whole rim segment, is arranged out of the major plane of extension of the rim in the steering configuration. At least in the storage configuration, the pivot axis is arranged, in a view along the axis of the steering column, behind the major plane of extension of the rim in the steering configuration. Preferably, the method comprises detecting a currently selected driving mode of the vehicle and/or adjusting the configuration automatically in response to a selected driving mode of the vehicle. Alternatively or additionally, the adjustment may be performed in response to a change of driving mode, which may correspond to the selection of driving mode.

Other features of the technology will be apparent from consideration of the information contained in the above as well as in or in combination with the following detailed description, abstract, drawings and claims. The present technology is illustrated by way of example, and not by way of limitation, in the figures of the accompanying drawings, in which like reference numerals refer to similar elements including:
Fig. 1 illustrates in a schematic perspective view a steering wheel of a motor vehicle in its steering configuration.
Fig. 2 illustrates in a schematic perspective view the steering wheel according to Fig. 1 in its storage configuration.
Fig. 3 illustrates schematically a method for adjusting the configuration of the steering wheel according to Fig. 1

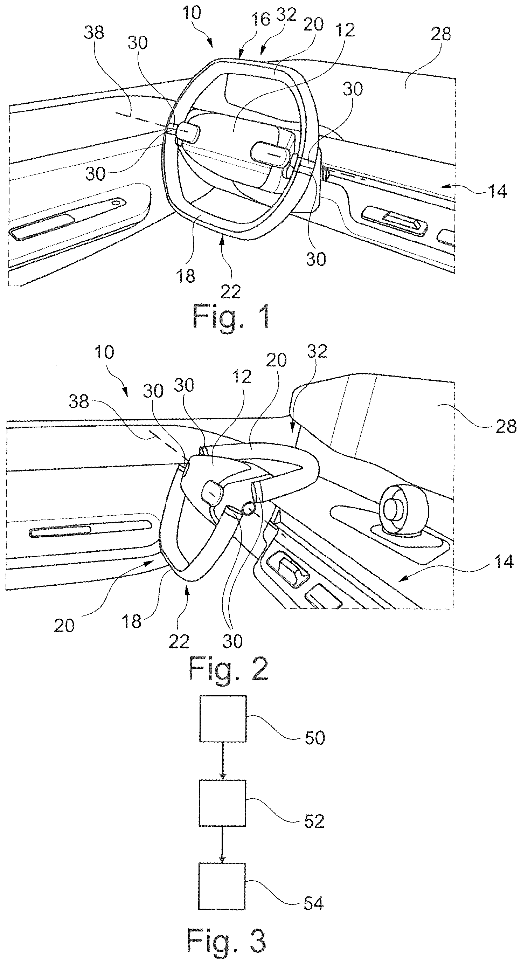

Fig. 1 shows in a schematic perspective front view a steering wheel 10 of a motor vehicle in a steering configuration. The steering wheel 10 comprises a central hub 12, which may be mounted to a steering column of the vehicle that may extend through or below a dashboard 14. The steering column may mechanically connect the steering wheel 10 to wheels of the vehicle, such as its front wheels. A turning of the steering wheel 10 may be transmitted to the wheels by the steering column. Alternatively, the steering column may, for example, only provide the bearing and/or shaft for rotatably supporting the steering wheel 10, in particular its hub 12. Especially in the case of a drive-by-wire system, the steering column may therefore have no mechanical connection to the wheels of the vehicle. Alternatively or additionally, the steering wheel 10 and/or the hub 12 may be functionally coupled to rotation sensors. This can allow steering wheel movement to be sensed and the respective sensed steering wheel movement information to be conveyed to structure(s) for changing an angle of the wheels of the vehicle.

The dashboard 14 comprises an instrument screen 28 arranged behind the steering wheel 10, which may be configured as a touchscreen or other form of display. Further, the wheel 10 comprises a rim 16 that is attached to the hub 12. A driver may grab the rim 16 to turn the steering wheel 10 around a central axis that corresponds to an axis of the steering column to control a direction into which the vehicle drives. In Fig. 1 a position of the steering wheel is shown that results in the vehicle driving straight. The hub 12 comprises, e.g., two actuation elements, for example allowing the driver to honk. Further, an airbag may be integrated into the hub 12.

The rim 16 comprises a first rim segment 18 that constitutes a lower half of the rim 16 and a second rim segment 20 that constitutes an upper half of the rim 16. The two rim segments 18, 20 form an essentially continuous rim 16 in the steering configuration, wherein both rim segments 18, 20 are arranged in the same plane, are symmetrical to each other and form a ring-shaped rim 16. The lower half of the rim 16 may have a flat section 22, e.g. to provide additional leg room for the driver. The shape of the rim 16 facilitates comfortable handling and steering. In the steering configuration, as shown in Fig. 1, the essentially continuous rim 16 defines a major plane of extension in which the two rim segments 18, 20 extend. The major plane of extension is perpendicular to a turning axis of the wheel 10 and therefore also to an axis of the steering column.

Both rim segments 18, 20 are each connected with two respective lateral spokes 30 that are each attached to a respective end of each rim segment 18, 20 in a circumferential direction. However, other configurations with other spoke positions and/or more or less spokes for the rim segments 18, 20 are also possible. The spokes 30, 32 extend radially inward to the hub 12 and slightly away from the driver and towards the dashboard 14.

As can be seen in Fig. 1, the two rim segments 18, 20 are two separate pieces. In a circumferential direction of the rim 16, the two end faces of each respective rim segment 18, 20 face each other in the steering configuration and may touch each other. However, at the split 26 in the rim 16, there may also be a small gap in the steering configuration between the two rim segments 18, 20. Presently, the respective ends of the rim segments 18, 20 are formed by their respective spokes 30. However, the spokes 30 may, for example, also be attached to the rim segments 18, 20 at a side of the rim segments 18, 20 facing away from the driver.

While the steering wheel 10 in the steering configuration is comfortable to use for driving the vehicle, it may at least partially obstruct full view of the instrument screen 28 and/or through the windshield for the driver. This can also easily be seen in Fig. 1. Such a view restriction is acceptable during manual driving of the car, since handling comfort may be safety relevant and since only a limited amount of information needs to be displayed on the screen 28. However, if no manual steering is required, for example in an autonomous driving mode of the motor vehicle, the steering wheel 10 in the steering configuration might unnecessarily restricts the view of the driver and/or unnecessarily occupy space in front of the driver in the passenger compartment.

To overcome this, the steering wheel 10 may be adjusted into its storage configuration, which is shown in the perspective view of Fig. 2. As can be seen, in the storage configuration, the second rim segment 20 is pivoted backwards around a pivot axis that is indicated in the figures with the line 38. The pivot axis is defined by a pivoting connection of the respective hub-facing ends of the spokes 30 of the second rim segment 20. The pivot axis 38 is parallel to the major plane of extension of the rim 16 and corresponds to a straight connection between the pivot connections of both respective spokes 30 of the second rim segment 20. With the steering wheel 10 arranged for straight driving, the pivot axis 38 is arranged essentially horizontally. The second rim segment 20 is thus pivoted around the associated pivot axis 38 such that at least part of the second rim segment 20 is arranged out of the major plane of extension of the rim 16. The second rim segment 20 may thus be folded against an upper side of the dashboard 14, as can be seen in Fig. 2. The rim 16 can thus better conform to the shape of the dashboard 14, as a result both blocking less useable space in the passenger compartment and allowing a better view of both the screen 28 and through the windshield. As an example, the driver may thus unobstructedly enjoy a movie displayed on the screen 28 during autonomous driving with a very comfortable free space in front of him.

Optionally alternatively or additionally, the first rim segment 18 may also be folded against a lower side of the dashboard 14. Such a construction is not illustrated in Fig. 2, however. Such a folding of the steering wheel 10 may provide a more comfortable and larger leg-room for the person sitting in the driver's seat and may also allow easier entry into and exit from the vehicle.

The pivot axis 38 and in particular the pivot joint of the spoke 30 with the hub 12 could occupy space in the hub 12, rendering packing and arrangement of other systems and components in the hub 12 more difficult. However, as can be seen in Fig. 2, the pivot axis 38 is arranged, in a view along the axis of the steering column, behind the major plane of extension of the rim. This facilitates packing in the hub 12. For example, the pivot axis / pivot joint does not conflict or at least conflicts less with arrangement of the airbag in the hub 12 than in a design where the pivot axis 38 intersects with or even lies within the major plane of extension. Instead, the connection of the spokes 30 with the hub 12 and thus the pivot axis 38 is spaced apart from the rim 16 in a direction backwards away from a driver facing side of the hub 12, allowing for more easier integration of the airbag and actuation elements in the hub 12. The connection between the spokes 30 and the respective rim segments 18, 20 is rigid and permanent. In particular, the spokes and the respective rim segments 18, 20 may be of a one-piece construction.

Preferably, the steering wheel 10 in the storage configuration is always rotated around the axis of the steering column in a position that corresponds to the straight forward driving position described above. As a result, the flat section 22 of the first rim segment 18 is at the 6 o'clock position, providing increased leg room for the driver. Similar, the second rim segment 20 may have an identical shape to the first rim segment 18, such that a flat section 32 of the second rim segment 22 is similarly facing upward, allowing a better view for the driver.

To adjust the steering wheel 10 from its steering configuration to its storage configuration, the second rim segment 20 (the upper half of the rim 16) is pivoted around the pivot axis 38 away from the driver and towards the front of the car and its dashboard 14. Accordingly, the second rim segment 20 is rotated out of the plane of the rim 16 in the steering configuration and out of a plane defined by the first rim segment 16. The ends of the two rim segments 18, 20 are thus not directly facing each other anymore.

Preferably, the hub 12 and/or the steering column are moved additionally towards the dashboard 14, for example by telescopic retraction. This frees even more space in front of the driver. In addition, that the second rim segment 20 resting on the dashboard 14 may block rotation of the second rim segment 20, thus preventing unwanted rotation of to the hub 12 and/or out of the storage configuration. Accordingly, there is no need for an additional locking mechanism in the storage configuration. Additionally or alternatively, the hub 12 and/or the steering column may also be tilted upwards or downwards to move toward the dashboard 14 and/or away from the driver. Preferably, pivoting of the second rim segment 20 and/or the first rim segment 18 is at least partially simultaneous to the movement of the hub 12 and/or steering column, resulting in a quick adjustment of steering wheel 10 configuration.

The steering wheel 10 may comprise a locking mechanism that selectable allows to block pivoting of the first and/or second rim segment 18, 20 in the steering configuration and/or storage configuration. Unwanted adjustment of the steering wheel 10 configuration may be prevented by the locking mechanism. Further, such a mechanism may allow safe steering of the vehicle even when only handling a pivotable rim segment such as the second rim segment 20. The blocking mechanism may also minimize play between the two rim segments 18, 20 in the steering configuration. The second rim segment 20 can thus be handled independently of the first rim segment 18 while still reliably turning the hub 12 and thus controlling driving direction.

Adjusting the steering wheel 10 may be manually performed or preferably by an actuator, such as an electric motor arranged inside the hub 12, beneath the dashboard 14 and/or on the steering column. Adjusting of the steering wheel 10 has been described in the direction from the steering configuration into the storage configuration. Adjusting from the storage configuration into the steering configuration may be achieved, for example, by moving the parts of the steering wheel 10 in the reverse direction and optionally by also reversely moving the steering column and/or the hub 12.

In addition to the adjustment of the steering wheel 10, when selecting an autonomous driving mode, the screen 28 may also be configured to be adjusted between a steering configuration and a viewing configuration. For example, the screen 28 may be moved upward and/or tilted more towards the driver during autonomous driving so that a larger effective screen surface and/or a better view of the screen 28 is provided. In particular, the screen 28 may be moved more in front of the windshield of the vehicle. The screen 28 may also be referred to as a display.

Fig. 3 illustrates schematically a method for adjusting the steering wheel 10 between its configurations. In step 50, a driving mode of the vehicle is detected, preferably with a sensor. In step 52, a desired steering wheel 10 configuration in response to the detected driving mode is selected, preferably with the storage configuration corresponding to an autonomous driving mode and the steering configuration corresponding to a manual driving mode. In particular, the adjustment may be performed in response to a change of driving mode. Such a selection may be performed by a control device. Further, the position of the second rim segment 20 and optionally of the hub 12 is adjusted according to the desired configuration in step 54, preferably with by actuator such as an electric motor. The actuator is preferably controlled by the control device.

### REFERENCE SIGNS LIST

- 10: steering wheel
- 12: hub
- 14: dashboard
- 16: rim
- 18: first rim segment
- 20: second rim segment
- 22: flat section of the first rim segment
- 24: actuation element
- 26: split in the rim
- 28: instrument screen
- 30: spokes
- 32: flat section of the second rim segment
- 38: line illustrating a pivot axis of the second rim segment
- 50: step
- 52: step
- 54: step

## Claims

1. Steering wheel (10) for a motor vehicle, the steering wheel (10) comprising
a hub (12) configured to be connected to a steering column of the motor vehicle and a rim (16) connected to the hub (12), the rim (16) comprising at least a first and a separate second rim segment (18, 20),
wherein the steering wheel (10) is configured to be adjusted between a steering configuration and a storage configuration,
wherein, in the steering configuration, the two rim segments (18, 20) form an essentially continuous rim (16) that defines a major plane of extension, in particular a ring-shaped and/or plane rim (16),
wherein, when adjusting the steering wheel (10) from the steering configuration into the storage configuration, at least one of the rim segments (20) is pivoted around an associated pivot axis (38) that extends transversely to an axis of the steering column, such that at least part of the respective rim segment (20), preferably the whole rim segment (20), is arranged out of the major plane of extension of the rim (16), and
wherein, at least in the storage configuration, the pivot axis (38) is arranged behind the major plane of extension of the rim (16) in a view along the axis of the steering column.

2. Steering wheel (10) according to claim 1,
wherein, in the steering configuration,
the pivot axis (38) of the respective rim segment (20) corresponds to an end or both ends of the rim segment (20)
or
the pivot axis (38) is arranged behind a major plane of extension of the respective rim segment (20).

3. Steering wheel (10) according to claim 1 or 2,
wherein the pivot axis (38) of the respective rim segment (20) is perpendicular to the axis of the steering column.

4. Steering wheel (10) according to any one of the previous claims,
wherein the major plane of extension of the rim (16) in the steering configuration is parallel to the pivot axis (38).

5. Steering wheel (10) according to any one of the previous claims,
the pivot axis (38) is spaced apart to the rim (16), in particular its major plane of extension, especially in a direction along the axis of the steering column,
and/or
wherein the pivot axis (38) intersects with the hub (12) spaced apart to the rim (16), especially in a direction along the axis of the steering column, and/or
the pivot axis (38) extends horizontally.

6. Steering wheel (10) according to any one of the previous claims,
wherein the steering wheel (10) is configured to translatory move the pivot axis (38) during adjustment between the steering configuration and the storage configuration.

7. Steering wheel (10) according to claim 6,
wherein the pivot axis (38) initially lies within the major plane of extension of the rim (16), in particular at its edge, and is translatory moved out of that plane during adjustment of the steering wheel (10) from the steering configuration to the storage configuration.

8. Steering wheel (10) according to any one of the previous claims,
wherein at least the respective rim segment (20) is moved during adjustment between the storage configuration and the steering configuration, preferably each rim segment (18, 20), is connected to the hub (12) with at least one spoke (30), preferably at least one respective spoke (30).

9. Steering wheel (10) according to claim 8,
wherein the respective spoke (30) connecting the respective rim segment (20) to the hub (12) that is moveable for adjusting the configuration of the steering wheel (10) terminates at least with one end in the pivot axis (38), preferably with its two ends and/or having an axial extension being coaxial with the pivot axis (38).

10. Steering wheel (10) according to claim 8 or 9,
wherein the respective spoke (30) connecting each respective rim segment (20) to the hub that is moveable for adjusting the configuration of the steering wheel (10) is pivotably mounted to the hub (12) and optionally translatory moveable.

11. Steering wheel (10) according to any one of the previous claims,
wherein the two rim segments (18, 20) constitute two halves of the rim (16), preferably the two halves being an upper half and a lower half, respectively, and/or preferably the two rim segments (18, 20) being symmetrical to each other, preferably at least the upper half being moveable for adjusting the configuration of the steering wheel (10).

12. Steering wheel (10) according to any one of the previous claims,
wherein the steering wheel (10) comprises an actuator for adjusting the steering wheel (10) between the storage configuration and the steering configuration, in particular by pivoting one of the rim segments (20) and optionally by translatory moving one pivot axis (38)
and/or
the steering wheel (10) is configured to be adjusted into the steering configuration in response to a change into a manual driving mode of the motor vehicle and into the storage configuration in response to a change into an autonomous driving mode of the motor vehicle.

13. Steering arrangement with the steering wheel (10) according to any one of the previous claims, further comprising at least one of:
- the steering column of the motor vehicle;
- a sensor configured to detect the driving mode of the motor vehicle; and
- a control unit configured for adjusting the configuration of the steering wheel (10), in particular in response to the detected driving mode.

14. Motor vehicle comprising the steering arrangement according to claim 13 and/or the steering wheel (10) according to any one of the previous claims 1 to 12, the motor vehicle preferably being configured to be selectably driven in a manual driving mode and an autonomous mode.

15. Method to adjust a steering wheel (10) of a motor vehicle between a storage configuration and a steering configuration, the steering wheel (10) comprising a hub (12) configured to be connected to a steering column of the motor vehicle and a rim (16) connected to the hub (12), the rim (16) comprising at least a first and a separate second rim segment (18, 20), in particular the steering wheel (10) being configured as the steering wheel (10) according to previous claims 1 to 12, the method comprising the steps of:
- Arranging the two rim segments (18, 20) to form an essentially continuous rim (16) with a major plane of extension, in particular a ring-shaped and/or plane rim (16), in the steering configuration; and
- Pivoting at least one of the two rim segments (20) around an associated pivot axis (38) that extends transversely to an axis of the steering column, such that at least part of the respective rim segment (20), preferably the whole rim segment (20), is arranged out of the major plane of extension of the rim (16) in the steering configuration,
wherein, at least in the storage configuration, the pivot axis (38) is arranged, in a view along the axis of the steering column, behind the major plane of extension of the rim (16) in the steering configuration.
